# FASCICULE DE BREVET EUROPEEN

(11) **EP 2 346 957 B1**
(45) Date de publication et mention de la délivrance du brevet: **08.01.2014**
(21) Numéro de dépôt: 09768178.7
(22) Date de dépôt: 10.11.2009
(51) Int. Cl.: C09J 7/02, B29D 11/00

(54) **PROCEDE DE TRAITEMENT AU MOYEN D'UN FILM ADHESIF D'UNE LENTILLE OPTIQUE COMPORTANT UN REVETEMENT ANTISALISSURE EN VUE DE SON DEBORDAGE**
VERFAHREN ZUR BEHANDLUNG EINER EINEN SCHMUTZABWEISENDEN ÜBERZUG ABWEISENDE OPTISCHE LINSE MIT EINEM KLEBFILM ZUM ZWECKE DEREN EINFASSUNG
METHOD FOR TREATING, BY MEANS OF AN ADHESIVE FILM, AN OPTICAL LENS COMPRISING A DIRT-REPELLANT COATING FOR THE EDGING THEREOF

(30) Priorité: 13.11.2008 FR 0857719
(43) Date de publication de la demande: 27.07.2011
(73) Titulaire: Essilor International (Compagnie Générale d'Optique), 94220 Charenton-le-Pont (FR)
(72) Inventeur: HABASSI, Chefik, F-94220 Charenton le Pont (FR)
(74) Mandataire: Catherine, Alain
(86) Numéro de dépôt international: PCT/FR2009/052171
(87) Numéro de publication internationale: WO 2010/055261

(56) Documents cités:
- US-A1- 2005 042 977

## Description

L'invention se rapporte d'une manière générale à l'utilisation d'une bande adhésive pour faciliter le débordage des verres pour l'optique, en particulier des lentilles, et plus particulièrement des lentilles ophtalmiques, pourvues d'un revêtement externe à propriétés hydrophobes et/ou oléophobes (top coat antisalissure), à un procédé de débordage et à une telle lentille rendue apte au débordage par la fixation à sa surface d'une bande adhésive.

Une lentille optique, notamment une lentille ophtalmique, résulte d'une succession d'opérations de moulage et/ou de surfaçage / polissage qui déterminent la géométrie des deux surfaces optiques convexe et concave de la lentille, puis de traitements de surface appropriés.

La dernière étape de finition d'une lentille ophtalmique est l'opération de débordage ou détourage, qui consiste à usiner la tranche ou la périphérie de la lentille de façon à la conformer aux dimensions requises pour adapter la lentille à la monture de lunette dans laquelle elle est destinée à prendre place.

Le débordage est réalisé généralement sur une meuleuse comprenant des meules diamantées qui effectuent l'usinage tel que défini ci-dessus. La lentille est maintenue, lors de cette opération, par des organes de blocage intervenant axialement. Le mouvement relatif du verre par rapport à la meule est contrôlé, généralement numériquement, afin de réaliser la forme souhaitée. Comme cela apparaît, il est tout à fait impératif que la lentille soit fermement maintenue lors de ce mouvement.

Pour cela, avant l'opération de débordage, on effectue une opération de glantage de la lentille, c'est à dire que l'on vient positionner sur la surface convexe de la lentille un moyen de maintien ou gland. Typiquement, un patin de maintien (ou patin de fixation), tel qu'une pastille autocollante, par exemple un patin adhésif double face, est disposé entre le gland et la surface convexe de la lentille. Le gland auquel adhère la lentille par l'intermédiaire du patin adhésif est alors mécaniquement fixé dans l'axe de montage de la meuleuse et un bras axial vient bloquer la lentille en appliquant une force centrale sur la face de la lentille opposée au gland. Lors de l'usinage, un effort de couple tangentiel est généré sur la lentille, ce qui peut engendrer une rotation de la lentille par rapport au gland si le système de maintien de la lentille n'est pas assez efficace. Le bon maintien de la lentille dépend principalement de la bonne adhérence à l'interface patin de maintien/surface convexe de la lentille.

Les lentilles ophtalmiques de dernière génération comportent le plus souvent une couche extérieure organique ou minérale qui modifie l'énergie de surface, par exemple un revêtement hydrophobe et/ou oléophobe antisalissure, bien connu dans la technique. Il s'agit le plus souvent de matériaux de type fluorosilane, qui diminuent l'énergie de surface afin d'éviter l'adhérence de souillures grasses qu'il est ainsi plus facile d'éliminer.

Ce type de revêtement de surface peut être d'une efficacité telle que l'adhérence à l'interface patin/surface convexe peut s'en trouver altérée, ce qui rend difficile des opérations de débordage satisfaisantes, en particulier pour des lentilles en polycarbonate (noté PC, par exemple le polycarbonate de bisphénol-A) dont le débordage génère des efforts beaucoup plus importants que pour les autres matières.

Lors du débordage, la lentille ne doit pas subir un désaxage supérieur à 2°, de préférence au plus 1°, et par conséquent l'adhésion du patin sur la surface de la lentille est essentielle à l'obtention d'un débordage satisfaisant. La conséquence d'un glissement de la lentille au cours d'une opération de débordage mal menée est la perte pure et simple de la lentille.

Pour remédier à ces difficultés de débordage des lentilles pourvues d'un revêtement externe hydrophobe et/ou oléophobe, on a proposé de former sur ces revêtements un revêtement temporaire, de nature organique ou minérale, en particulier une couche protectrice de MgF₂. Par exemple, les demandes de brevet européen EP 1392613 et EP 1633684, au nom du déposant, décrivent l'emploi d'un tel revêtement temporaire, qui accroît l'énergie de surface et permet donc à l'opticien de procéder à un débordage fiable de la lentille. Après débordage, le revêtement temporaire doit être enlevé afin de restituer à la lentille ses propriétés de surface hydrophobes et/ou oléophobes.

Le dépôt de films protecteurs pelables de nature polymère sur des revêtements antisalissure a été décrit notamment dans les demandes de brevet WO 2005/015270, WO 03/057641 et JP 2004-122238. Elles divulguent des compositions durcissables appliquées sous forme liquide directement au contact de la couche antisalissure afin de former un (des) revêtement(s) protecteurs évitant le glissement de la lentille pendant l'opération de débordage.

Il a également été proposé d'interposer des films adhésifs temporaires entre la surface d'une lentille à propriétés antisalissures et l'organe de fixation pour la maintenir au cours de l'opération de débordage, notamment dans les demandes de brevet WO 03092957, JP 2004-141607 et US 2005042977.

La demande WO 03/092957 décrit le dépôt d'un film à propriétés adhésives comprenant un adhésif sensible à la pression (ou PSA), préférentiellement de nature acrylique.

La demande JP2004-141607 décrit le dépôt à la surface d'une lentille équipée d'un revêtement antisalissure d'une bande adhésive obtenue en déposant un adhésif sensible à la pression sur un film support en polymère. Le film support a une épaisseur de 10 à 100 microns, un module d'Young supérieur à 1 GPa et présente une transmittance d'au moins 80%. Typiquement, une bande comprenant un film support présentant un module d'Young de 4 GPa revêtu d'un adhésif de nature silicone est collée en pressant la surface adhésive contre la surface de la lentille.

La demande US 2005042977 décrit une construction similaire, mettant en jeu une bande adhésive obtenue en déposant une couche d'adhésif sensible à la pression de 1 à 100 µm d'épaisseur sur un film support en polymère d'au moins 10 µm d'épaisseur. Le module d'élasticité en traction du film support (en l'absence d'adhésif) varie préférentiellement de 9,8 N/mm² à 4410 N/mm² (soit de 9,8 MPa à 4410 MPa). Au dessus de la valeur maximale, il est difficile de conformer le film à la forme de la lentille.

Cette bande adhésive permet le débordage d'une lentille ophtalmique porteuse d'un revêtement externe antisalissure ayant une épaisseur de 1-500 nm, et de préférence 1-30 nm lorsqu'il est déposé sur un revêtement antireflet.

Les films adhésifs utilisables dans la demande US 2005042977 sont sélectionnés de façon empirique au cours d'un test d'adhésion non normalisé. Ce sont ceux pour lesquels il faut exercer une force d'arrachement d'au minimum 0,0392 N pour les séparer d'une plaque de polyéthylène téréphtalate (PET) préalablement revêtue d'une couche d'un silicone fluoré (composé X70-201), selon une méthode de pelage décrite dans la norme japonaise JIS Z0237.

En pratique, le test d'adhésion mis en oeuvre dans la demande US 2005042977 apparaît insuffisamment décrit pour permettre de sélectionner les films adhésifs permettant le débordage. Le mode opératoire décrit ne permet pas d'immobiliser correctement le composé X70-201 sur la plaque de PET, de sorte qu'il n'est pas possible de pratiquer dans de bonnes conditions ce test.

La mise au point d'un nouveau procédé de débordage de lentilles revêtues d'une couche antisalissure, qui soit fiable et garantisse un taux de succès très élevé pour l'opération de débordage, permettant d'éviter tout problème de glissement de la lentille pendant l'opération de débordage en question, reste donc nécessaire, ce qui constitue l'un des objectifs de l'invention.

Après débordage, le retrait de la couche temporaire doit permettre de récupérer un revêtement externe hydrophobe et/ou oléophobe ayant des propriétés pratiquement identiques à ses propriétés initiales et en particulier un angle de contact statique avec l'eau pratiquement égal à l'angle de contact statique avec l'eau initial.

L'invention vise également à résoudre le problème du débordage d'articles d'optique comportant un revêtement antisalissure externe d'épaisseur relativement élevée, c'est-à-dire supérieure ou égale à 2 nm, préférentiellement supérieure à 5 nm, voire même supérieure ou égale à 10 nm. En effet, pour accroître les performances du revêtement hydrophobe et/ou oléophobe, il est souhaitable d'augmenter l'épaisseur de celui-ci de façon à atteindre des valeurs d'épaisseur plus importantes que celles utilisées classiquement, qui sont de l'ordre de 2 nm. Or, l'augmentation de l'épaisseur du revêtement antisalissure augmente la difficulté de débordage du verre.

Typiquement, les épaisseurs classiques programmées pour le dépôt de revêtements hydrophobes et/ou oléophobes dans des enceintes de dépôt sous vide du type Leybold 1104, sont de l'ordre de 15 nm. Les revêtements à propriétés hydrophobes améliorées correspondent généralement à des épaisseurs programmées de 15 à 25 nm, préférentiellement de 20 à 25 nm. L'homme du métier sait que les épaisseurs physiques réelles obtenues sont, le plus souvent, inférieures aux épaisseurs programmées. Par "épaisseur programmée," on entend dans la présente demande une épaisseur programmée sur une enceinte de dépôt sous vide du type Leybold 1104, de préférence Leybold 1104.

Un autre objectif de l'invention est de fournir une lentille, ayant des propriétés de surface hydrophobes et/ou oléophobes, apte au débordage.

Ces buts sont atteints selon l'invention par un procédé de traitement mettant en jeu un film composite adhésif temporaire aux propriétés améliorées.

Le procédé de traitement d'une lentille optique de l'invention, permettant notamment de rendre apte au débordage une lentille optique, comprend les étapes suivantes :
- fournir une lentille optique revêtue sur au moins une de ses surfaces principales d'un revêtement externe hydrophobe et/ou oléophobe ;
- former sur au moins une partie du revêtement externe hydrophobe et/ou oléophobe de la lentille optique, de préférence la totalité, un film composite adhésif temporaire comprenant un film préformé dont une surface principale adhère à une couche d'adhésif sensible à la pression, ladite couche d'adhésif étant en contact direct avec le revêtement hydrophobe et/ou oléophobe, le module d'élasticité en traction E' du film préformé étant supérieur ou égal à 4200 MPa, et la contrainte à la rupture de l'assemblage constitué dudit film composite adhésif temporaire collé à une éprouvette de polycarbonate revêtue d'une couche de silane fluoré, mesurée en traction conformément à la norme de détermination de la résistance au cisaillement NF EN 1465, étant supérieure ou égale à 0,05 MPa ;
- récupérer la lentille optique comportant, en contact direct avec au moins ladite partie dudit revêtement hydrophobe et/ou oléophobe, le film composite adhésif temporaire adhérant, par sa couche d'adhésif sensible à la pression, à la surface de la lentille revêtue.

Par film composite, au sens de la présente demande, on entend un film comprenant au moins deux éléments : un film préformé et une couche d'adhésif sensible à la pression.

Dans la présente demande, lorsqu'une lentille comprend un ou plusieurs film(s), couche(s) ou revêtement(s) à sa surface, l'expression "déposer un film, une couche ou un revêtement sur la lentille" signifie qu'un film, une couche ou un revêtement est déposé sur la surface à découvert (exposée) du revêtement externe de la lentille, c'est-à-dire le revêtement le plus éloigné du substrat de la lentille.

Un revêtement qui est "sur" un substrat ou qui a été déposé "sur" un substrat est défini comme un revêtement qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement.

Dans la présente demande le terme "polymère" englobe les homopolymères, copolymères et oligomères. Par (co)polymère, on entend un copolymère ou un polymère. Par (méth)acrylate, on entend un acrylate ou un méthacrylate.

Sauf indication contraire, toutes les épaisseurs divulguées sont des épaisseurs physiques.

La lentille optique utilisée dans la présente invention comprend un substrat, de préférence transparent, en verre organique ou minéral, ayant une face principale convexe et une face principale concave, l'une au moins desdites faces principales comportant un revêtement antisalissure (revêtement hydrophobe et/ou oléophobe). Le terme lentille désigne également une ébauche de lentille. Cette lentille est de préférence une lentille ophtalmique pour lunettes. La lentille peut être une lentille polarisée, une lentille photochromique ou une lentille solaire, teintée.

Le procédé de l'invention est préférentiellement mis en oeuvre sur la face convexe de la lentille, mais il peut également être mis en oeuvre sur sa face concave ou sur les deux faces principales d'une lentille revêtues chacune d'un revêtement antisalissure.

Parmi les matériaux convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Parmi les substrats préférés selon l'invention, on peut citer des substrats obtenus par polymérisation des (méth)acrylates d'alkyle, en particulier des (méth)acrylates d'alkyle en C₁-C₄, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Par polycarbonate (PC), on entend au sens de la présente invention aussi bien les homopolycarbonates que les copolycarbonates et les copolycarbonates séquencés.

Les substrats particulièrement recommandés sont les substrats obtenus par (co)polymérisation du bis allyl carbonate du diéthylène glycol, vendu, par exemple, sous la dénomination commerciale CR-39^{®} par la société PPG Industries (lentilles ORMA^{®} ESSILOR), ou par polymérisation des monomères thio(méth)acryliques, tels que ceux décrits dans la demande de brevet français FR 2734827, ou les polythiouréthanes. Les substrats peuvent être obtenus par polymérisation de mélanges des monomères ci-dessus, ou peuvent encore comprendre des mélanges de ces polymères et (co)polymères.

Les lentilles de l'invention peuvent comporter d'autres revêtements de surface entre le substrat et le revêtement antisalissure, notamment un revêtement antichoc, un revêtement anti-abrasion et/ou anti-rayure et/ou un revêtement antireflet. Préférentiellement, elles comportent un revêtement externe hydrophobe et/ou oléophobe déposé sur un revêtement antireflet mono ou multicouche.

Les revêtements hydrophobes et/ou oléophobes (synonyme d'antisalissure dans la présente demande) sont bien connus dans la technique et sont généralement déposés sur un revêtement antireflet, mais ils peuvent aussi être déposés, par exemple, directement sur des revêtements anti-abrasion et/ou anti-rayure.

Ils sont définis comme des revêtements dont l'angle de contact statique avec de l'eau désionisée est supérieur ou égal à 75°, de préférence supérieur ou égal à 90°, et mieux supérieur ou égal à 100°. L'angle de contact statique peut être déterminé selon la méthode de la goutte de liquide, selon laquelle une goutte de liquide ayant un diamètre inférieur à 2 mm est déposée doucement sur une surface solide non absorbante et l'angle à l'interface entre le liquide et la surface solide est mesuré.

Les revêtements hydrophobes et/ou oléophobes préférés ont une faible énergie de surface, c'est-à-dire qu'ils réduisent l'énergie de surface de la lentille à moins de 20 mJ/m², de préférence moins de 14 mJ/m², mieux moins de 13 mJ/m² et encore mieux moins de 12 mJ/m². Les énergies de surface sont calculés dans la présente demande selon la méthode OWENS-WENDT décrite dans la référence suivante : "Estimation of a surface force energy of polymers" OWENS D.K., WENDT R.G. (1969) J. Appl. Polym. Sci, 13, 1741-1747.

Dans le cadre de la présente invention, leur épaisseur va en général de 1 à 25 nm, mieux de 1 à 15 nm.

Les revêtements hydrophobes et/ou oléophobes selon l'invention sont de préférence de nature organique. Par couche de nature organique, on entend une couche comprenant une proportion non nulle en masse, de préférence d'au moins 40 %, mieux d'au moins 50 % de matériaux organique par rapport à la masse totale de la couche.

Les revêtements de surface hydrophobes et/ou oléophobes préférés comprennent au moins un composé fluoré, mieux au moins un composé de nature silane et/ou silazane porteur d'un ou plusieurs groupes fluorés, en particulier des groupes hydrocarcarbonés fluorés, perfluorocarbonés, polyéther fluorés, tel que le groupe F₃C-(OC₃F₆)₂₄-O-(CF₂)₂-(CH₂)₂-O-CH₂-Si(OCH₃)₃ ou perfluoropolyéther.

Une méthode classique pour former un revêtement hydrophobe et/ou oléophobe consiste à déposer des composés porteurs de groupes fluorés et de groupes Si-R, R représentant un groupe hydroxyle ou un groupe précurseur tel qu'un groupe hydrolysable, par exemple Cl, NH₂, NH- ou -O-alkyl, de préférence un groupe alcoxy. Ils sont de préférence fabriqués à partir de fluorosilanes ou fluorosilazanes précurseurs, comprenant de préférence au moins deux groupes hydrolysables par molécule. De tels composés sont capables de subir, lorsqu'ils sont déposés sur une surface, des réactions de polymérisation et/ou de réticulation, directement ou après hydrolyse.

Des fluorosilanes particulièrement adaptés pour former des revêtements hydrophobes et/ou oléophobes sont ceux contenant des groupements fluoropolyéthers décrits dans le brevet US 6,277,485.

Ces fluorosilanes répondent à la formule générale : 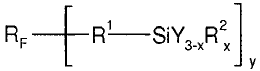 dans laquelle R_{F} est un groupe polyfluoropolyéther monovalent ou divalent, R¹ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; R² est un groupe alkyle inférieur (c'est-à-dire un groupe alkyle en C₁-C₄) ; Y est un atome d'halogène, un groupe alcoxy inférieur (c'est-à-dire une groupe alcoxy en C₁-C₄, de préférence méthoxy ou éthoxy), ou un groupe acyloxy inférieur (c'est-à-dire -OC(O)R³ où R³ est un groupe alkyle en C₁-C₄) ; x est 0 ou 1 ; et y est 1 (R_{F} est monovalent) ou 2 (R_{F} est divalent). Les composés appropriés ont en général une masse molaire moyenne en nombre d'au moins 1000. De préférence, Y est un groupe alcoxy inférieur et R_{F} est un groupe perfluoropolyéther.

D'autres fluorosilanes recommandés sont ceux de formule : 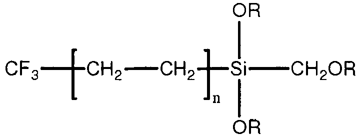
où n = 5, 7, 9 ou 11 et R est un groupe alkyle, de préférence en C₁-C₁₀ tel que -CH₃, -C₂H₅ et -C₃H₇ ;
CF₃(CF₂)₅CH₂CH₂Si(OC₂H₅)₃ ((tridécafluoro-1,1,2,2-tétrahydro)octyl-triéthoxysilane) ;
CF₃CH₂CH₂SiCl₃ ; 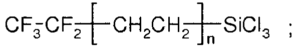 et 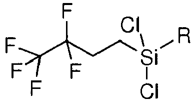
où n = 7 ou 9 et R est tel que défini ci-dessus.

Des compositions contenant des fluorosilanes également recommandées pour la préparation de revêtements hydrophobes et/ou oléophobes sont décrites dans brevet US 6,183,872. Elles contiennent des fluoropolymères à groupements organiques porteurs de groupes à base de silicium représentés par la formule générale suivante et ayant une masse moléculaire de 5.10² à 1.10⁵ : 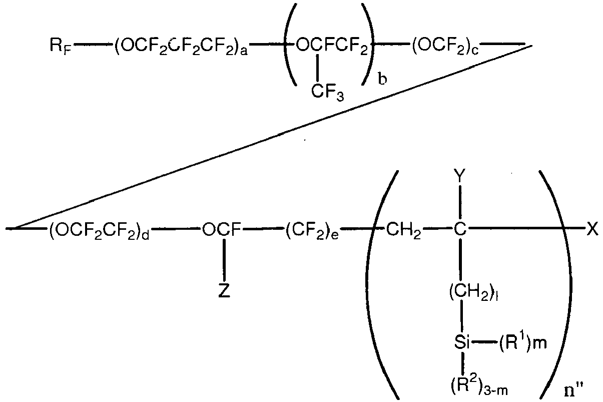 dans laquelle R_{F} représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; R¹ représente un groupe hydroxyle ou un groupe hydrolysable ; R² représente un atome d'hydrogène ou un groupement hydrocarboné monovalent ; I représente 0, 1 ou 2 ; m représente 1, 2 ou 3 ; et n" représente un entier au moins égal à 1, préférentiellement au moins égal à 2.

D'autres composés convenant pour la formation de revêtements antisalissure à base de fluorosilanes sont décrits dans les brevets JP 2005-187936 et EP 1300433, et répondent à la formule : 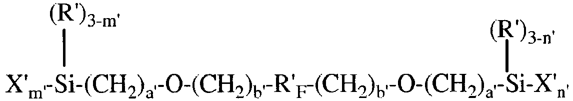 dans laquelle R'_{F} est un radical divalent perfluoropolyéther à chaîne linéaire, R' est un radical alkyle en C₁-C₄ ou un radical phényle, X' est un groupe hydrolysable, a' est un entier de 0 à 2, b' est un entier de 1 à 5, et m' et n' sont des entiers égaux à 2 ou 3.

Des compositions commerciales permettant de préparer des revêtements hydrophobes et/ou oléophobes sont les compositions KY130^{®} (répondant à la formule du brevet JP 2005-187936) et KP 801M^{®} commercialisées par Shin-Etsu Chemical, et la composition OPTOOL DSX^{®} (une résine fluorée comprenant des groupes perfluoropropylène répondant à la formule du brevet US 6,183,872) commercialisée par Daikin Industries. La composition OPTOOL DSX^{®} est la composition de revêtement antisalissure préférée.

Des solvants utilisables pour les compositions de revêtement antisalissure sont les solvants fluorés et les alcanols tels que le méthanol, de préférence les solvants fluorés. Des exemples de solvants fluorés sont des molécules organiques partiellement ou totalement fluorées ayant une chaîne carbonée comprenant de 1 à 25 atomes de carbone, telles que les alcanes fluorés, de préférence perfluorés, et les éther-oxydes fluorés, de préférence les étheroxydes d'alkyle perfluoroalkylés et leurs mélanges. On peut citer le perfluorohexane ou l'éther de nonafluoro-isobutyle.

Les méthodes de dépôt des compositions de revêtement antisalissure sont très variées et comprennent le dépôt en phase liquide, tel que le dépôt au trempé, par centrifugation ou pulvérisation, ou le dépôt en phase vapeur, tel que l'évaporation sous vide. Le dépôt par centrifugation ou trempage est préféré.

Comme indiqué précédemment, le film composite adhésif temporaire de l'invention est formé, ou déposé (appliqué), directement sur le revêtement externe hydrophobe et/ou oléophobe.

Ce film composite adhésif temporaire comprend au moins deux couches, à savoir un film préformé et une couche d'adhésif de contact, qui sont directement en contact l'une avec l'autre.

Le film préformé comporte deux surfaces principales, la première étant revêtue d'une couche d'adhésif sensible à la pression et destinée à faire face à la lentille, alors que la seconde est généralement non revêtue et destinée à faire face à l'organe de fixation du dispositif de débordage.

Le film préformé peut être constitué de tout matériau susceptible d'être éliminé lors d'une opération ultérieure subséquente à une étape de débordage, possédant un module d'élasticité en traction E' supérieur ou égal à 4200 MPa et tel que la résistance au cisaillement de l'assemblage constitué dudit film composite adhésif temporaire collé à une éprouvette de polycarbonate revêtue d'une couche de silane fluoré, déterminée conformément à la norme de détermination de la résistance au cisaillement NF EN 1465, est supérieure ou égale à 0,05 MPa.

Le module d'élasticité en traction E' du film préformé est de préférence supérieur ou égal à 4450 MPa, mieux supérieur ou égal à 4500 MPa. Il permet d'évaluer la capacité du matériau du film préformé à se déformer sous l'effet d'une force appliquée et est mesuré en l'absence de couche adhésive.

Ce module d'élasticité (ou module d'Young, ou module de conservation) est mesuré à 23°C conformément à la norme ISO 527-3(1996). Selon cette norme, on mesure l'allongement du film pour une force croissante de traction appliquée au film (mesurée en N/mm²) et une vitesse normalisée. La courbe de traction ainsi obtenue, représentant la contrainte (en N/mm²) en fonction de l'allongement (en %), fait apparaître un segment linéaire qui caractérise le domaine élastique, et un point d'inflexion qui caractérise la fin de la limite élastique du film ou seuil d'écoulement. L'abscisse de ce point est typiquement située entre 12 et 15% d'allongement et l'ordonnée varie d'un film à un autre, selon la rigidité du film.

Le module d'élasticité en traction E' du film composite adhésif temporaire de l'invention (film préformé + couche de PSA) est de préférence supérieur ou égal à 2500 MPa.

La contrainte à la rupture de l'assemblage constitué du film composite adhésif temporaire collé à une éprouvette de polycarbonate revêtue d'une couche de silane fluoré, déterminée en traction conformément à la norme de détermination de la résistance au cisaillement NF EN 1465, est de préférence supérieure ou égale à 0,08 MPa, mieux supérieure ou égale à 0,1 MPa. Elle caractérise les performances d'adhésion dudit film composite adhésif et dépend notamment de la nature de l'adhésif de contact mis en jeu.

Ce paramètre de résistance au cisaillement est déterminé conformément à la norme NF EN 1465 intitulée "Adhésifs - Détermination de la résistance au cisaillement d'assemblage rigide-rigide, collés à recouvrement simple", adaptée du fait que l'on utilise des éprouvettes en polycarbonate revêtues successivement d'une couche de primaire, d'une couche de revêtement anti-abrasion et anti-rayures, d'un revêtement antireflet et d'un revêtement antisalissure à base d'Optool™ DSX. Ces éprouvettes et le test de résistance au cisaillement sont décrits en détail dans la partie expérimentale.

L'interposition d'un film composite adhésif possédant des caractéristiques de module d'élasticité (pour le film préformé dudit film composite adhésif temporaire) et de résistance au cisaillement conformes à l'invention entre la lentille à surface hydrophobe et/ou oléophobe et le patin de maintien permet d'effectuer son débordage avec un désaxage nul ou minimal. Les inventeurs ont constaté que ces deux caractéristiques étaient nécessaires à l'obtention d'une bonne adhésion du patin de maintien. Le film composite adhésif temporaire de l'invention présente aussi une excellente adhésion à la surface hydrophobe et/ou oléophobe de la lentille.

Le film préformé est préférentiellement de nature polymère. Il peut être composé d'un ou de plusieurs polymères préférentiellement choisis parmi le PET (polyéthylène téréphtalate) ou le TAC (triacétate de cellulose). Il s'agit idéalement d'un film à base de triacétate de cellulose.

Il peut être utilisé sous forme de mousse polymère. Le matériau du film préformé peut aussi comprendre des éléments de renfort, et se présenter par exemple sous la forme d'une résine renforcée par des fibres de verre ou de carbone.

Bien évidemment, le matériau de la couche d'adhésif de contact du film adhésif temporaire de l'invention doit être tel qu'il n'altère pas définitivement les propriétés de surface du revêtement hydrophobe et/ou oléophobe et qu'après l'élimination de celui-ci, les propriétés optiques et de surface de la lentille sont globalement identiques à celles que la lentille possédait avant le dépôt du revêtement protecteur temporaire. Le matériau de la couche d'adhésif de contact doit notamment posséder une force de cohésion suffisante de façon à ce que le retrait du film composite adhésif, par exemple par pelage, s'effectue sans laisser de résidus à la surface du revêtement antisalissure.

Ladite couche d'adhésif est une couche d'adhésif sensible à la pression (PSA : pressure sensitive adhesive). Cette couche sera couramment nommée "film PSA" ou "couche d'adhésif de contact" dans la présente demande et est préférentiellement optiquement transparente. Sa température de transition vitreuse Tg peut varier préférentiellement de -45°C à 0°C.

Par adhésif sensible à la pression ou adhésif de contact, on entend dans la présente demande un adhésif capable d'adhérer à une surface par simple application d'une pression, sans qu'il soit nécessaire de faire intervenir une autre source d'énergie externe telle que la température, une irradiation ou un solvant. Toutefois, d'autres sources d'énergie externes peuvent être utilisées pour améliorer l'adhésion. Ces adhésifs sont collants de façon permanente sous forme sèche (sans solvant), à température ambiante ou à leur température d'utilisation. Leur mécanisme d'adhésion ne met pas en jeu la formation de liaisons covalentes avec la surface avec laquelle ils sont mis en contact, mais au contraire l'établissement d'interactions électrostatiques réversibles de type Van der Waals.

Les adhésifs de contact sont généralement disponibles sous trois formes : en composition aqueuse (latex), dans une composition à base de solvant organique, ou sous forme thermofusible (obtenus par un procédé de type "hot melt").

Les familles de PSA sont classées en fonction de la nature de l'élastomère principal utilisé dans la formule adhésive. Sans y être limité, les principales familles utilisables selon la présente invention sont les PSA à base de caoutchouc naturel (polyisoprène), les PSA à base de poly(méth)acrylates (tels que le polyacrylate d'éthylhexyle, le polyacrylate de n-butyle), les PSA à base de copolymères styréniques ou de copolymères à blocs styréniques (tels que les blocs Styrène-Isoprène (SI), Styrène-Isoprène-Styrène (SIS), Styrène-Butadiène (SB), Styrène-Butadiène-Styrène (SBS)), et leurs mélanges.

Les copolymères statistiques styrène-butadiène, les caouthouc synthétiques tels que le butyl-caoutchouc ou les polyisoprènes synthétiques, les polyacétates de vinyle, les polyisobutylènes, les polyipropylènes, les polybutadiènes, les polymères à base d'acrylonitrile, les polymères siliconés (par exemple de nature silane ou siloxane), les polyuréthanes, les éthers de polyvinyle et d'éthyle, les polyvinyl pyrrolidones, et leurs mélanges, peuvent également être utilisés comme constituants principaux dans les formulations de PSA. D'autres exemples de PSA peuvent être trouvés dans l'ouvrage de Sobieski et al., Handbook of Pressure-Sensitive Adhesive Technology, 2nd ed., pp. 508-517 (D. Satas, ed.), Van Nostrand Reinhold, New York (1989), qui est incorporé ici par référence. Les PSA utilisés dans la présente invention sont de préférence choisis parmi les PSA à base de polyacrylates, polyuréthanes et/ou de copolymères à blocs styréniques.

Dans une première variante de l'invention, le film composite adhésif temporaire est appliqué sur au moins une partie du revêtement externe hydrophobe et/ou oléophobe de la lentille optique, une surface principale du film préformé du film composite adhésif temporaire ayant été revêtue de ladite couche d'adhésif sensible à la pression avant l'application dudit film adhésif composite temporaire sur la lentille optique. Le film préformé constitue alors un film support. En d'autres termes, l'ensemble film préformé + couche d'adhésif sensible à la pression a été préparé dans une étape antérieure à son application sur le revêtement externe hydrophobe et/ou oléophobe.

Selon un premier mode de réalisation, la couche adhésive de PSA est formée par dépôt sur la surface principale du film support d'une composition adhésive liquide suivi d'une étape de durcissement ou séchage de la composition liquide (typiquement conduite à une température de 40°C à 130°C) jusqu'à l'obtention d'un état dans lequel ladite composition n'est plus capable de s'écouler et forme une couche d'épaisseur uniforme. Cette composition adhésive peut être déposée par tout procédé par voie liquide classique convenable tel que le trempage (dip coating), la centrifugation (spin coating), la pulvérisation, ou appliquée au moyen d'un pinceau (brush coating), de préférence par dip coating ou spin coating.

Ladite composition adhésive peut naturellement comprendre des additifs permettant de modifier ses caractéristiques de pégosité (agents promoteurs d'adhésion) ou rhéologiques (viscosité, thixotropie). Comme cela est bien connu, il est également possible qu'un polymère ou un mélange de polymères qui ne possède pas en tant que tel de propriétés d'adhésif de contact puisse en acquérir grâce à l'adjonction des additifs précités.

Selon un deuxième mode de réalisation, la couche adhésive est appliquée sur le film support par collage d'un film préformé, qui est par exemple disponible sous forme d'un sandwich entre deux liners (bandes protectrices contre-collées). De tels empilements liner / film PSA / liner sont disponibles dans le commerce, par exemple sous la forme d'un film PSA de 25 µm d'épaisseur dont les deux faces adhésives sont chacune protégées par un liner de polyester de 50 µm d'épaisseur. Ils sont préférentiellement appliqués sur le film support par lamination.

Il est également possible d'utiliser directement un empilement film support / film PSA / liner.

La couche d'adhésif de contact du film composite adhésif temporaire a préférentiellement une épaisseur allant de 1 à 100 µm, de préférence de 2 à 50 µm, mieux de 5 à 40 µm. Le film support a de préférence une épaisseur de 10 à 250 µm, mieux 20 à 200 µm. Typiquement, le ratio épaisseur du film support / épaisseur de la couche d'adhésif de contact va de 1 :1 à 10:1, de préférence 2:1 à 8:1. L'épaisseur totale du film composite adhésif temporaire de l'invention va de préférence de 1 à 250 µm, mieux de 10 à 200 µm.

Bien que dans sa plus simple expression, le film composite adhésif temporaire de l'invention soit un film bicouche, il peut également comprendre une ou plusieurs couches additionnelles déposées sur sa seconde surface principale, c'est-à-dire sa face non revêtue du film PSA. Bien que ne constituant pas le mode de réalisation préféré de l'invention, le film composite adhésif de l'invention peut notamment être rendu adhésif sur ses deux faces en déposant une couche d'adhésif sur sa seconde surface principale.

Le film composite adhésif temporaire de l'invention est appliqué par collage en pressant sa couche d'adhésif de contact contre la surface du revêtement hydrophobe et/ou oléophobe de la lentille, de façon à ce que ladite couche d'adhésif soit en contact direct avec ledit revêtement hydrophobe et/ou oléophobe.

Il peut être appliqué sur la surface de la lentille par simple pression manuelle. Toutefois, du fait que le film support possède un module d'élasticité élevé, le film composite adhésif de l'invention est relativement rigide. Lorsque ce film composite adhésif temporaire est destiné à recouvrir une grande partie de la surface de la lentille, notamment la totalité de la surface de la lentille, il est particulièrement recommandé d'utiliser pour son dépôt la technique et l'équipement spécifique décrits dans la demande WO 2006105999, en particulier dans ses exemples 3 et 4.

Cette méthode d'application d'un film plan sur une lentille optique peut être utilisée quelle que soit la courbure de la lentille destinée à être recouverte du film temporaire de l'invention. Elle met en jeu une assistance thermique permettant de déformer à chaud le film au moyen d'une matrice de pressage ovoïde. Le film adhésif est typiquement préchauffé à une température de l'ordre de 80 à 180°C afin de procéder à son thermoformage, avant d'être appliqué contre le revêtement antisalissure de la lentille.

Il est également possible de procéder à un transfert du film composite adhésif de l'invention d'un support temporaire vers la surface de la lentille. Selon cette variante, le film composite adhésif de l'invention est collé (par sa face non adhésive, c'est-à-dire par la face du film support non revêtue de la couche d'adhésif de contact) à un support adhésif de large dimension, par exemple un support recouvert d'une couche d'adhésif. L'ensemble support temporaire + film composite adhésif de l'invention est alors collé à la surface de la lentille en application, par exemple, du procédé décrit dans les exemples 3 et 4 de la demande WO 2006105999. A l'issue de cette étape d'application, la face adhésive du support temporaire peut être en contact avec une partie du revêtement antisalissure de la lentille, dans le cas où le film composite adhésif de l'invention ne recouvre pas la totalité de la surface de la lentille. Enfin, le support temporaire est retiré. Naturellement, la mise en oeuvre de cette variante suppose que le film composite adhésif de l'invention adhère de façon plus forte à la surface de la lentille que le support temporaire n'adhère à la surface du film composite adhésif ou au revêtement antisalissure. Il convient donc de choisir un support temporaire recouvert d'une couche d'adhésif présentant une faible affinité pour la surface externe du film adhésif et le revêtement antisalissure.

Selon une deuxième variante de l'invention, la formation sur au moins une partie du revêtement externe hydrophobe et/ou oléophobe de la lentille optique comprend l'application successive de la couche adhésive (PSA) puis du film préformé.

Dans un premier temps, la couche adhésive est transférée à partir d'un support de transfert sur la couche hydrophobe et/ou oléophobe. Le support de transfert est ôté, la couche adhésive adhérant de façon plus forte à la surface de la lentille qu'à la surface de la couche de transfert. Dans un second temps, le film préformé est appliqué ou transféré, depuis un support de transfert, à la surface de la couche adhésive.

Dans les deux variantes précédentes, comme support de transfert, on utilisera de préférence un support souple, typiquement de 10 à 200 microns ou un support flexible, ayant généralement une épaisseur de 0.2 to 5 mm, mieux de 0.5 à 2 mm, fait de préférence d'une matière plastique.

Des exemples de (co)polymères thermoplastiques pouvant être employés pour la fabrication de ce support sont les polysulfones, les poly(méth)acrylates aliphatiques, tels que le poly(méth)acrylate de méthyle, le polyéthylène, le polypropylène, le polystyrène, les copolymères à blocs SBM (styrène-butadiène-méthacrylate de méthyle), le sulfure de polyphénylène (PPS), les polyoxydes d'arylène, les polyimides, les polyesters, les polycarbonates tels que le polycarbonate de bisphénol A, le polychlorure de vinyle, les polyamides tels que les nylons, leurs copolymères et leurs mélanges. Le matériau thermoplastique préféré est le polycarbonate.

Le support temporaire peut être employé en ayant au préalable été revêtu d'une couche d'agent de démoulage destinée à faciliter le transfert. Cette couche peut éventuellement être éliminée à la fin de l'étape de transfert.

Le film composite adhésif temporaire est formé de façon à ce qu'il recouvre au moins partiellement le revêtement externe hydrophobe et/ou oléophobe de la lentille.

Le dépôt peut être effectué sur la totalité de la surface de la face de la lentille destinée à recevoir le système patin adhésif de maintien/gland ou sur une partie de celle-ci. En particulier, le film composite adhésif temporaire pourra être appliqué uniquement sur la zone destinée à recevoir le contact du patin de maintien de la lentille, par exemple la partie centrale de la lentille.

Le film composite adhésif peut couvrir uniformément la surface ciblée, c'est à dire présenter une structure continue, mais il peut aussi présenter une structure discontinue, par exemple prendre la forme d'une trame. Le film peut par exemple être "troué" de façon à éviter de faire disparaître des marques effaçables qui seraient présentes à la surface de lentille, notamment de verres progressifs. La forme du film adhésif n'est pas limitée, celui-ci pouvant avoir, sans limitation, une forme circulaire, elliptique, rectangulaire ou oblongue.

La zone couverte par le film adhésif composite temporaire est telle que la surface de contact entre le film composite et le patin de maintien est suffisante pour assurer l'adhésion de la lentille au patin. Généralement, le film composite temporaire recouvre au moins 15 %, de préférence au moins 20 %, mieux au moins 30 %, mieux encore au moins 40%, et de préférence la totalité de la surface de la face de la lentille sur laquelle vient adhérer le patin, c'est-à-dire généralement la face convexe de la lentille.

Par ailleurs, le film composite adhésif de l'invention est avantageusement un film optiquement transparent. On entend par là qu'une lentille optique revêtue sur l'une de ses faces principales d'un revêtement antisalissure et d'un film composite adhésif temporaire selon l'invention possède un facteur de transmission dans le visible τᵥ, encore nommé facteur relatif de transmission dans le visible, supérieur à 75 %, mieux supérieur à 80 % (mesuré conformément à la norme ISO 8980-3 et défini conformément à la norme ISO 13666:1998 dans la gamme de longueur d'onde allant de 380 à 780 nm). Ainsi, il reste possible d'effectuer sur la lentille revêtue du film composite adhésif temporaire des mesures classiques de puissance par un frontofocomètre.

Le film préformé permet d'élever l'énergie de surface de la lentille à propriétés hydrophobes et/ou oléophobes. De préférence, le film préformé élève l'énergie de surface de la lentille jusqu'à une valeur d'au moins 15 mJ/m², de préférence jusqu'à une valeur d'au moins 25 mJ/m². Typiquement l'énergie de surface du film préformé est de 15 à 70 mJ/m², de préférence 25 à 70 mJ/m².

A la suite du dépôt du film composite adhésif temporaire, on obtient une lentille apte au débordage.

Le procédé de traitement d'une lentille optique selon l'invention peut en outre comprendre une étape ultérieure de glantage de la lentille comportant le film composite adhésif temporaire en contact direct avec le revêtement hydrophobe et/ou oléophobe, c'est-à-dire une étape de disposition de ladite lentille dans un dispositif de débordage comportant un système de maintien comprenant un moyen de maintien adhérant à la surface externe du film composite adhésif temporaire (c'est-à-dire généralement la seconde surface principale du film préformé, au sens de l'invention), une étape de débordage de la lentille glantée, et une étape de déglantage consistant à retirer le moyen de maintien de la surface de la lentille. Ces étapes additionnelles sont classiques et connues de l'homme de l'art (cf. par exemple EP 1392613 et US 2005042977), et ne seront donc pas décrites en détail. Le procédé de traitement selon l'invention constitue dans ce cas un procédé de débordage d'une lentille optique.

Le système de maintien comprend généralement un moyen de maintien (gland) et un patin de maintien (désigné couramment par « pad »). Les patins de maintien préférés sont des pastilles autocollantes (pastilles équipées d'un adhésif de contact), mieux des pastilles qui sont autocollantes sur chacune de leurs faces, par exemple des pastilles de type 3M Leap™ II PAD ou des pastilles plus élaborées fournies par la société Vigteqnos, décrites notamment dans les demandes WO2006082635, WO2006003700 et WO2006003699.

Le moyen de maintien peut adhérer directement à la surface externe du film composite adhésif temporaire, c'est-à-dire sans la présence additionnelle d'un patin de maintien, par exemple dans le cas où le film composite adhésif de l'invention comporte une couche d'adhésif sur sa seconde surface principale, ou adhérer directement à la surface externe du film composite adhésif temporaire, par exemple par l'intermédiaire d'un patin de maintien, ce qui constitue le mode de réalisation préféré.

Après débordage, le verre présentera les dimensions requises pour convenablement s'insérer dans la monture qui lui est destinée. Plus précisément, le procédé de débordage selon l'invention fournit des verres ayant subi un désaxage maximum de 2°, et, de façon optimale, inférieur ou égal à 1°.

Dans une étape ultérieure, le film composite adhésif temporaire peut être retiré, notamment par arrachement (détachement par application d'une force), de la lentille débordée, afin de lui restituer ses propriétés de surface hydrophobes et/ou oléophobes.

A la fin de l'étape d'élimination du film adhésif composite temporaire, une lentille optique finale débordée est récupérée, laquelle présente des caractéristiques optiques et de surface du même ordre, voire quasiment identiques à celles de la lentille initiale, notamment en ce qui concerne ses propriétés de surface hydrophobes et/ou oléophobes.

Bien entendu, ce mode de réalisation couvre le cas où une lentille optique déjà revêtue du film composite adhésif temporaire de l'invention est disposée dans un dispositif de débordage.

Les films composites adhésifs selon l'invention peuvent être utilisés pour restaurer l'aptitude au débordage de lentilles revêtues de tout revêtement externe à propriétés hydrophobes et/ou oléophobes, mais possèdent un intérêt tout particulier dans le cas du débordage d'articles d'optique comportant un revêtement hydrophobe et/ou oléophobe d'épaisseur supérieure ou égale à 2 nm, de préférence supérieure ou égale à 5 nm, mieux supérieure ou égale à 10 nm. Une gamme d'épaisseur préférée est la gamme 2-10 nm.

Le procédé de l'invention possède l'avantage d'augmenter de façon conséquente le taux de réussite du débordage de lentilles revêtues d'un revêtement hydrophobe et/ou oléophobe, en particulier obtenus à partir des composés décrits dans le brevet US 6183872 grâce au film composite adhésif favorisant l'adhérence lors du débordage. Le taux de réussite d'un procédé de débordage conforme à l'invention avoisine 100 %, et permet donc de s'affranchir des aléas dus à la qualité des verres débordés.

L'invention concerne également une lentille optique apte au débordage, susceptible d'être obtenue par le procédé de l'invention, comportant sur au moins une de ses surfaces principales un revêtement externe hydrophobe et/ou oléophobe, et, déposé directement sur ledit revêtement externe hydrophobe et/ou oléophobe, un film composite adhésif temporaire tel que décrit ci-dessus, ledit film composite adhérant ainsi à la surface de la lentille revêtue.

L'invention concerne enfin l'utilisation d'un film composite adhésif temporaire tel que décrit ci-dessus pour maintenir dans un dispositif de débordage une lentille optique comportant sur au moins une de ses surfaces principales un revêtement externe hydrophobe et/ou oléophobe.

L'invention est illustrée, de façon non limitative, par les exemples suivants.

### PARTIE EXPERIMENTALE

### 1. Procédures générales et matériel

Les articles d'optique employés dans les exemples comprennent un substrat de lentille ORMA^{®} ESSILOR de 65 mm de diamètre, de puissance -2,00 dioptries et d'épaisseur 1,2 mm, revêtu d'un revêtement de primaire antichoc (1 micromètre d'épaisseur) à base d'un latex polyuréthane contenant des motifs polyester, durci à 90 °C pendant 1 heure (Witcobond^{®} 234 de BAXENDEN CHEMICALS modifié par dilution afin de diminuer sa viscosité, dépôt centrifuge à 1500 tours/minute pendant 10 à 15 secondes) puis du revêtement anti-abrasion et anti-rayures (hard coat) (environ 3 microns d'épaisseur) divulgué dans l'exemple 3 du brevet EP 0614957 (d'indice de réfraction égal à 1,50), à base d'un hydrolysat de GLYMO et DMDES, de silice colloïdale et d'acétylacétonate d'aluminium, d'un revêtement antireflet et enfin d'un revêtement antisalissure.

Plus précisément, ledit revêtement anti-abrasion et anti-rayures a été obtenu par dépôt et durcissement d'une composition comprenant en masse, 224 parties de GLYMO, 80,5 parties de HCl 0,1 N, 120 parties de DMDES, 718 parties de silice colloïdale à 30 % massique dans le méthanol, 15 parties d'acétylacétonate d'aluminium et 44 parties d'éthylcellosolve. La composition comporte également 0,1 % de tensioactif FLUORAD^{™} FC-430^{®} de 3M en masse par rapport à la masse totale de la composition.

Sur ce revêtement anti-abrasion et anti-rayure est déposé un revêtement antireflet tétracouche ZrO₂ (27 nm)/SiO₂ (21 nm)/ZrO₂ (80 nm)/SiO₂ (81 nm) (Les épaisseurs sont des épaisseurs physiques)(déposé par évaporation sous vide) et enfin un revêtement antisalissure à base d'Optool™ DSX (14 nm d'épaisseur programmée, dépôt sous vide, composé commercialisé par Daikin Industries).

Le bâti de dépôt est une machine Leybold 1104 équipé d'un canon à électrons ESV14 (8kV) pour l'évaporation des oxydes et d'un creuset à effet Joule pour le dépôt du top coat.

### 2.Tests de caractérisation

a) Les modules d'élasticité ont été mesurés à 23°C et à humidité ambiante à l'aide d'un appareil QT50 LP de MTS utilisé en mode traction conformément à la norme ISO 527-3(1996) (capteur de force 1 kN et déplacement classe 0,5 ; extensomètre optique ME046), sur des éprouvettes normalisées (de type 2) de films (film support ou film adhésif) ayant une largeur et une longueur respectivement de 12,7 mm et 180 mm et de section inférieure ou égale à 1 mm. La distance entre repères est de 50 mm +/-0,5 mm. La distance initiale entre les mâchoires est de 100 mm + /- 5 mm. La vitesse de traction est de 5 mm/min.
b) Les tests de pelage à 180° ont été effectués conformément à la norme ISO 8510-2 datée de décembre 2006, mais à une vitesse de 300 mm/min. La machine d'essais est la machine QT50 LP de MTS. Capteur de force 100 N et déplacement classe 0,5. Les mesures ont été effectuées à 23 °C et à humidité ambiante. Les éprouvettes et le film adhésif sont de dimensions telles que la largeur de recouvrement est de 25 mm et la longueur de recouvrement est de 150 mm. Paramètres de mise en oeuvre : Maroufleur normalisé masse 2217 g. Nombre de marouflages : 10.

Les éprouvettes sont revêtues de l'empilement décrit en c) ci-dessous. Elles comportent donc un revêtement antisalissure à base d'Optool™ DSX de 14 nm d'épaisseur programmée (sauf indication inverse d'une épaisseur programmée de 25 nm).
c) Détermination de la résistance au cisaillement d'un film composite adhésif temporaire

Ce paramètre de résistance au cisaillement a été déterminé en traction à 23°C, à humidité ambiante conformément à la norme NF EN 1465, adaptée du fait que l'on utilise des éprouvettes en polycarbonate revêtues successivement d'une couche de primaire de latex polyuréthane contenant des motifs polyester (Witcobond^{®} 234 de BAXENDEN CHEMICALS, dépôt centrifuge à 1500 tours/minute pendant 10 à 15 secondes, durci à 90 °C pendant 1 heure), d'une couche du revêtement anti-abrasion et anti-rayures (hard coat) divulgué dans l'exemple 3 du brevet EP 0614957 (obtenu de la même façon que celui détaillé dans le § 1), du revêtement antireflet tétracouche ZrO₂/SiO₂/ZrO₂/SiO₂ (déposé par évaporation sous vide et décrit dans le § 1) et enfin d'un revêtement antisalissure à base d'Optool™ DSX de 14 nm d'épaisseur programmée (dépôt sous vide, composé commercialisé par Daikin Industries).

Ledit revêtement anti-abrasion et anti-rayures a été obtenu de la même façon que celui détaillé dans le § 1.

Le déroulement du test est le suivant. Une bande de film adhésif (comprenant un film support revêtu d'une couche d'adhésif de contact) de 25 mm x 150 mm est déposée, côté adhésif, sur la face de l'éprouvette comportant le revêtement antisalissure, en laissant une languette de film dépasser de l'éprouvette.

Largeur de recouvrement 25 mm ; longueur de recouvrement 25 mm. Paramètres de mise en oeuvre : maroufleur normalisé masse 2217g, nombre de marouflages : 10. Une force axiale (dans l'axe de l'éprouvette) est exercée jusqu'à rupture d'adhésion entre le film et l'éprouvette. La vitesse de traction est de 5 mm/min. On mesure la contrainte à la rupture en mégapascals.

Le test est effectué sur des films adhésifs sensibles à la pression, d'épaisseur de la couche adhésive de 50 à 150 microns, préférentiellement de 80 microns d'épaisseur, que l'on considèrera comme l'épaisseur de test. Il conduit à des résultats très proches quelle que soit l'épaisseur utilisée dans la gamme d'épaisseur précitée, pour des adhésifs présentant des propriétés rhéologiques du même ordre.

### d) Protocole de mesure de désaxage de lentilles soumises à une opération de décourage

### i) Description du test

Le test de débordage est effectué sur une meuleuse Essilor Kappa. Les lentilles sont débordées de façon à leur donner la forme d'un gabarit de monture spécifique (voir ci-dessous). Les équipements suivants sont nécessaires pour réaliser le test :
Frontofocomètre Essilor CLE 60 (pour pointage des verres et contrôle final)
Chaîne numérique Essilor Kappa (Centreur/Bloqueur et Meuleuse)
Gabarit de monture de type Charmant référence 8320, modèle 05, taille 51
Pseudo monture de contrôle
Pastille adhésive ou patin adhésif de maintien LEAP II de diamètre 24 mm GAM200 de la société 3M
Gland Essilor pour accueillir la pastille adhésive

### ii) L'échantillonnage et les paramètres de montage

Les cotes de montage retenues sont les suivantes :
Hauteur : Demi-hauteur boxing soit PD (droite et gauche) = 32 mm et Axe =90°

Le cycle de détourage utilisé est un cycle adapté au matériau (cycle plastique pour bas indice de réfraction, cycle polycarbonate pour PC et cycle pour substrat Moyen indice de réfraction MHI). La pression de serrage retenue est la pression correspondant à l'option verre fragile de la meuleuse.

### iii) Contrôles

Après débordage, on effectue un contrôle afin de déterminer si l'opération de débordage a été effectuée de façon satisfaisante. Les contrôles sont effectués à l'aide du frontofocomètre CLE 60 en pointant les lentilles placées dans la pseudo-monture. Les axes sont repérés durant cette phase.

Si la lentille, après l'opération de débordage ne peut être insérée dans la pseudo-monture ou si la lentille peut être insérée dans la pseudo-monture, mais qu'elle présente un désaxage de plus de 2°, la lentille est non-conforme et échoue au test (résultat noté "-" dans le tableau 2). Si le verre présente un désaxage de moins de 2°, la lentille passe le test de débordage avec succès (résultat noté "+" dans le tableau 2).

Les résultats fournis dans le tableau 2 correspondent à une moyenne sur 20 lentilles.

### e) Protocole du test de perçage

Après une opération de débordage, l'ensemble lentille et gland/patin adhésif, avec le gland/patin adhésif adhérant fermement à la lentille est placé dans une machine de perçage Optodrill ou Minima2 et maintenu par un bloqueur. La lentille est alors percée :
- soit manuellement avec la perceuse Minima 2 munie d'un foret de 2.2 mm de diamètre, de vitesse de rotation 3500 tours/minute.
- soit automatiquement avec la perceuse Optidrill Evo munie d'un foret de 2,2 mm de diamètre de vitesse de rotation 12000 tours/minute.

Après perçage, le système de fixation est dévissé et on récupère la lentille percée et le gland/patin adhésif, puis le gland est ôté et la lentille percée récupérée.

Une lentille qui peut être positionnée dans le dispositif de perçage est considérée comme ayant réussi le test de perçage (résultat noté "+" dans le tableau 2; dans le cas contraire le résultat noté "-").

### 3. Mode opératoire général d'application d'un film composite adhésif temporaire

Les films adhésifs bicouches conformes à l'invention ont été préparés par application sur un film support en PET ou TAC d'un film adhésif préformé. L'un des deux liners de protection d'un film adhésif préformé de 25 µm d'épaisseur est retiré et la surface adhésive du film est positionnée en face de l'une des deux faces du film support. Puis ces deux films sont collés en les faisant passer entre deux rouleaux, en contrôlant la pression appliquée (4-5 bars).

Après cette étape d'assemblage de la couche d'adhésif de contact et du film support, le film adhésif plan résultant est découpé aux dimensions du dispositif de conformation décrit dans la demande WO 2006105999 (minimum : 10cm x 10 cm). Puis le deuxième liner de protection est retiré et le film adhésif est mis en place sur la platine de conformation. La lentille optique comportant sur sa face convexe un revêtement antisalissure est mise en place sur la platine en orientant sa face convexe en direction de la face adhésive du film adhésif.

On procède alors à un chauffage latéral du film plan à une température de 100°C et à l'application de la matrice de pressage (tampon pour tampographie en silicone Base 4.00) contre la surface non adhésive du film adhésif (surface libre du film support) de façon à le déformer de manière appropriée. Le tampon est alors abaissé de façon à appliquer la surface adhésive du film contre la surface de la lentille revêtue (Force d'application : 20 kg). Le tampon est retiré, ce qui permet de récupérer une lentille optique comportant un revêtement antisalissure revêtu du film composite adhésif temporaire adhérant à la surface de la lentille. Si le film composite adhésif temporaire est plus grand que la lentille, il peut être découpé aux dimensions de ladite lentille à l'issue de l'étape de pressage.

### 4. Descriptions des films adhésifs employés dans les exemples

Le film support selon l'invention utilisé dans l'exemple 1 est un film de triacétate de cellulose (TAC) fourni par la société Tsutsunaka, présentant un module d'élasticité en traction de 4600 MPa à 23°C (contrainte à la rupture : 115 MPa, déformation nominale à la rupture : 27 %, contrainte à la limite élastique : 91 MPa, déformation à la limité élastique : 4,5 %).

Le film composite adhésif selon l'invention (exemple 1) comprend le film support de TAC présenté ci-dessus et en tant que couche d'adhésif de contact une colle acrylique de température de transition vitreuse de - 26°C fournie par la société Nitto Denko et commercialisée sous la référence CS9621.

Le film composite adhésif temporaire de l'exemple comparatif C1 est le film adhésif SWT10 fourni par la société Nitto Denko. Le film composite adhésif temporaire de l'exemple comparatif C2 est le film adhésif MPF NT-8 fourni par la société Mitsui. Le film composite adhésif temporaire de l'exemple comparatif C3 diffère de celui de l'exemple 1 en ce que la couche d'adhésif de contact a été remplacée par la colle HJ9150. Le film composite adhésif temporaire de l'exemple comparatif C4 diffère de celui de l'exemple 1 en ce que la couche d'adhésif de contact a été remplacée par la colle commercialisée sous la référence 8141 par la société 3M.

Les films supports des exemples comparatifs C1 et C2 possèdent un module d'élasticité en traction inférieur à 4200 MPa (valeur non fournie). Les films adhésifs des exemples comparatifs C3 et C4 possèdent une résistance au cisaillement inférieure à 0,05 MPa dans les conditions de tests utilisées dans la présente demande, et un module d'élasticité en traction supérieur à 4200 MPa, qui est plus élevé que celui du film support seul.

Les caractéristiques des différents films adhésifs employés sont présentées dans le tableau 1.

**Tableau 1**

| | Matériau film support | Epaisseur film support | Nature de l'adhésif de contact | Epaisseur couche adhésif de contact |
|---|---|---|---|---|
| Exemple 1 | TAC | 80 µm | Polyacrylique | 25 µm |
| Exemple C1 | PVC | 70 µm | Polyacrylique | 10 µm |
| Exemple C2 | Polyéthylène | 95 µm | Polvoléfine | 25 µm |
| Exemple C3 | TAC | 80 µm | Polyacrylique | 50 µm |
| Exemple C4 | TAC | 80µm | Polyacrylique | 25 µm |

### 5. Résultats

Le tableau 2 présente les performances au cours de différents tests des films adhésifs et des lentilles qui en sont revêtues.

**Tableau 2**

| | Exemple 1 | Exemple C1 | Exemple C2 | Exemple C3 | Exemple C4 |
|---|---|---|---|---|---|
| Module d'élasticité en traction du film adhésif (MPa) | 3000 | 280 | 102 | 5500 | 6700 |
| Contrainte à la rupture (MPa) | 66 | 14,8 | 11 | 57 | 80 |
| Déformation nominale à la rupture (%) | 18 | 176 | 380 | 14 | 23 |
| **Contrainte à la rupture (Test de Résistance au cisaillement) (MPa)** | **0,13**** | **0,077**** | **0,057**** | **0,032**** | **0,031**** |
| Pelage à 180° Force d'arrachement linéique (N/cm) | 0,08** | 0,06** | 0,012** | 0,055** | 0,039** |
| | (0,072)*** | (0,08)*** | (0,011)*** | | |
| Test débordage / Test perçage (**) | +/+ | -/- | -/- | -/- | -/- |
| Test débordage / Test perçage (***) | +/+ | -/- | -/- | -/- | -/- |

| | | | | | |
|---|---|---|---|---|---|
| * Test décrit dans le § 2.c). ** Tests conduits avec un revêtement antisalissure d'épaisseur programmée 14 nm. *** Tests conduits avec un revêtement antisalissure d'épaisseur programmée 25 nm. | | | | | |

Seules les lentilles équipées d'un film adhésif conforme à l'invention ont fourni de bons résultats lors des tests de débordage et perçage (exemple 1). Les lentilles des exemples C1 à C4 conduisent toutes à des désaxages de plus de 2°. On constate donc que l'invention produit son résultat avantageux même si l'épaisseur de la couche hydrophobe et/ou oléophobe est plus importante (épaisseur programmée de 25 nm).

Les exemples comparatifs C1 et C2 démontrent l'importance fondamentale de la caractéristique de module d'élasticité en traction que doit présenter un film adhésif conforme à l'invention.

Les exemples comparatifs C3 et C4 démontrent l'importance fondamentale de la caractéristique de résistance au cisaillement que doit présenter un film adhésif conforme à l'invention, qui est notamment liée à la nature de l'adhésif de contact. En dépit d'une rigidité convenable, les films adhésifs des exemples C3 et C4 conduisent à de mauvaises performances lors de l'opération de débordage.

Les tests de pelage à 180° révèlent, en comparant les exemples 1 et C1 pour un revêtement antisalissure d'épaisseur 10 nm, que les performances des films adhésifs au cours de ce test ne sont pas nécessairement corrélées à une bonne aptitude au débordage.

Il est à signaler que le procédé de l'invention peut également être mis en oeuvre en utilisant un film support de polyéthylène téréphtalate (PET) commercialisé par DuPont Teijin Films sous la référence Melinex^{®} 506 au lieu d'un film support de TAC, toutes choses étant égales par ailleurs. Le film composite adhésif temporaire correspondant, équipé de la même couche d'adhésif de contact ou avec une colle PSA AR Clear 8796 de la société Adhesives Research, conduit à des résultats comparables lors des essais de débordage (données non fournies). Le film adhésif de l'exemple 1 constitue toutefois le film préféré de l'invention car le triacétate de cellulose se découpe mieux en machine que le PET.

Par ailleurs, il a été constaté que même après une semaine de stockage au contact du film composite adhésif temporaire de l'invention, le revêtement antisalissure ne montrait aucun signe de dégradation de ses performances.

## Revendications

1. Procédé de traitement d'une lentille optique, comprenant les étapes suivantes :
- fournir une lentille optique revêtue sur au moins une de ses surfaces principales d'un revêtement externe hydrophobe et/ou oléophobe ;
- former sur au moins une partie du revêtement externe hydrophobe et/ou oléophobe de la lentille optique un film composite adhésif temporaire, comprenant un film préformé dont une surface principale adhère à une couche d'adhésif sensible à la pression, ladite couche d'adhésif étant en contact direct avec le revêtement hydrophobe et/ou oléophobe ;
- récupérer la lentille optique comportant, en contact direct avec au moins ladite partie dudit revêtement hydrophobe et/ou oléophobe, le film composite adhésif temporaire adhérant par sa couche d'adhésif sensible à la pression à la surface de la lentille revêtue ;
**caractérisé en ce que** le module d'élasticité en traction E' du film préformé est supérieur ou égal à 4200 MPa et **en ce que** la contrainte à la rupture de l'assemblage constitué dudit film composite adhésif temporaire collé à une éprouvette de polycarbonate revêtue d'une couche de silane fluoré, mesurée en traction conformément à la norme de détermination de la résistance au cisaillement NF EN 1465, est supérieure ou égale à 0,05 MPa.

2. Procédé selon la revendication 1, **caractérisé en ce que** le film composite adhésif temporaire est appliqué sur au moins une partie du revêtement externe hydrophobe et/ou oléophobe de la lentille optique, le film préformé du film composite adhésif temporaire étant un film support dont une surface principale a été revêtue de ladite couche d'adhésif sensible à la pression avant l'application dudit film composite adhésif temporaire.

3. Procédé selon la revendication 1 ou 2, **caractérisé en ce que** le module d'élasticité en traction E' du film préformé est supérieur ou égal à 4450 MPa, mieux supérieur ou égal à 4500 MPa.

4. Procédé selon l'une quelconque des revendications précédentes, **caractérisé en ce que** la contrainte à la rupture de l'assemblage constitué dudit film composite adhésif collé à une éprouvette de polycarbonate revêtue d'une couche de silane fluoré, mesurée en traction conformément à la norme de détermination de la résistance au cisaillement NF EN 1465 est supérieure ou égale à 0,08 MPa, de préférence supérieure ou égale à 0,1 MPa.

5. Procédé selon l'une quelconque des revendications précédentes, **caractérisé en ce que** le film préformé est un film à base de polyéthylène téréphtalate ou un film à base de triacétate de cellulose.

6. Procédé selon l'une quelconque des revendications précédentes, **caractérisé en ce que** le film composite adhésif a une épaisseur allant de 1 à 250 µm, de préférence de 10 à 200 µm.

7. Procédé selon l'une quelconque des revendications précédentes, **caractérisé en ce que** le revêtement hydrophobe et/ou oléophobe a une épaisseur supérieure ou égale à 2 nm, de préférence supérieure ou égale à 5 nm, mieux supérieure ou égale à 10 nm.

8. Procédé selon l'une quelconque des revendications précédentes, **caractérisé en ce que** le revêtement hydrophobe et/ou oléophobe est à base de matériaux de nature fluorosilane et/ou fluorosilazane.

9. Procédé selon l'une quelconque des revendications précédentes, **caractérisé en ce que** le film composite adhésif temporaire est un revêtement retirable par arrachement.

10. Procédé selon l'une quelconque des revendications précédentes, **caractérisé en ce qu'**il comprend en outre les étapes suivantes :
- disposer la lentille optique dans un dispositif de débordage comportant un système de maintien comportant un moyen de maintien de sorte que le moyen de maintien adhère à la surface externe du film composite adhésif temporaire ;
- déborder ladite lentille ;
- retirer la lentille du dispositif de débordage; et
- retirer le film composite adhésif de façon à récupérer une lentille optique finale débordée.

11. Lentille optique apte au débordage, susceptible d'être obtenue par le procédé selon l'une quelconque des revendications 1 à 9.

## Patentansprüche

1. Verfahren zur Bearbeitung einer optischen Linse, das die folgenden Schritte umfasst:
- Bereitstellung einer optischen Linse, die auf mindestens einer ihrer Hauptoberflächen mit einer äußeren wasser- und/oder ölabweisenden Beschichtung versehen ist;
- Herstellung auf mindestens einem Teil der äußeren wasser- und/oder ölabweisenden Beschichtung der optischen Linse eines temporären Verbundhaftfilms, der aus einer vorgeformten Folie besteht, dessen Hauptoberfläche an einer druckempfindlichen Klebeschicht anhaftet, wobei sich die genannte Klebeschicht in direktem Kontakt mit der wasser- und/oder ölabweisenden Beschichtung befindet;
- Entnahme der mit dem temporären Verbundhaftfilm versehenen optischen Linse, wobei der Verbundhaftfilm durch seine druckempfindliche Klebeschicht auf der Oberfläche der beschichteten Linse anhaftet und sich in direktem Kontakt mit mindestens genannten Teil der genannten wasser- und/oder ölabweisenden Beschichtung befindet;
und das **dadurch gekennzeichnet ist, dass** das Zug-Elastizitätsmodul E' der vorgeformten Folie größer oder gleich 4200 MPa ist, und dass die Bruchbeanspruchung der Verbindung aus dem vorgenannten temporären Verbundhaftfilm und einem mit einer Schicht aus fluoriertem Silan beschichtetem Polykarbonat-Probekörper, auf welchem die Folie aufgeklebt ist, größer oder gleich 0,05 MPa ist, wobei die Messung gemäß der Norm NF EN 1465 zur Bestimmung der Zugscherfestigkeit erfolgt.

2. Verfahren entsprechend Anspruch 1, das **dadurch gekennzeichnet ist, dass** der temporäre Verbundhaftfilm auf mindestens einem Teil der äußeren wasser- und/oder ölabweisenden Beschichtung der optischen Linse appliziert wird, wobei die vorgeformte Folie des temporären Verbundhaftfilms eine Trägerfolie darstellt, von welcher eine Hauptoberfläche vor Aufbringen des temporären Verbundhaftfilms mit der genannten druckempfindlichen Klebeschicht beschichtet wurde.

3. Verfahren entsprechend Anspruch 1 oder 2, das **dadurch gekennzeichnet ist, dass** das Zug-Elastizitätsmodul E' der vorgeformten Folie größer oder gleich 4450 MPa, besser noch größer oder gleich 4500 MPa ist.

4. Verfahren entsprechend einem der vorgenannten Ansprüche, das **dadurch gekennzeichnet ist, dass** die Bruchbeanspruchung der Verbindung aus dem vorgenannten Verbundhaftfilm und einem mit einer Schicht aus fluoriertem Silan beschichteten Polykarbonat-Probekörper, auf welchem die Folie aufgeklebt ist, größer oder gleich 0,08 MPa, vorzugsweise größer oder gleich 0,1 MPa ist, wobei die Messung gemäß der Norm NF EN 1465 zur Bestimmung der Zugscherfestigkeit erfolgt.

5. Verfahren entsprechend einem der vorgenannten Ansprüche, das **dadurch gekennzeichnet ist, dass** die vorgeformte Folie eine Folie auf der Basis von Polyethylenterephthalat oder eine Folie auf der Basis von Cellulosetriacetat ist.

6. Verfahren entsprechend einem der vorgenannten Ansprüche, das **dadurch gekennzeichnet ist, dass** der Verbundhaftfilm eine Dicke von 1 bis 250 µm, vorzugsweise von 10 bis 200 µm besitzt.

7. Verfahren entsprechend einem der vorgenannten Ansprüche, das **dadurch gekennzeichnet ist, dass** die wasser- und/oder ölabweisende Beschichtung eine Dicke besitzt, die größer oder gleich 2 nm, vorzugsweise größer oder gleich 5 nm, besser noch größer oder gleich 10 nm ist.

8. Verfahren entsprechend einem der vorgenannten Ansprüche, das **dadurch gekennzeichnet ist, dass** die wasser- und/oder ölabweisende Beschichtung auf einem Material auf Basis von Fluorsilan und/oder Fluorsilazan basiert.

9. Verfahren entsprechend einem der vorgenannten Ansprüche, das **dadurch gekennzeichnet ist, dass** der temporäre Verbundhaftfilm eine Beschichtung darstellt, die durch Abreissen entfernt werden kann.

10. Verfahren entsprechend einem der vorgenannten Ansprüche, das **dadurch gekennzeichnet ist, dass** es darüber hinaus die folgenden Schritte beinhaltet:
- Aufnahme der optischen Linse in einer Randschleifmaschine, die ein derartiges Haltesystem besitzt, dass das Haltewerkzeug an der äußeren Oberfläche des temporären Verbundhaftfilms anhaftet;
- Randschleifen der genannten Linse;
- Entnahme der Linse aus der Randschleifmaschine; und
- Entfernung des Verbundhaftfilms und Entnahme der fertigen optischen Linse mit geschliffenem Rand.

11. Randschleifbare optische Linse, die mit Hilfe verfahrens entsprechend einem der Ansprüche 1 bis 9 hergestellt werden kann.

## Claims

1. A Method for treating an optical lens, comprising the steps of:
- providing an optical lens coated on at least one of the in surfaces thereof with a hydrophobic and/or oleophobic external coating;
- forming on at least part of the hydrophobic and/or oleophobic external coating of the optical lens a temporary adhesive composite film, comprising a pre-formed film, one main surface of which adheres to a pressure-sensitive adhesive layer, said adhesive layer directly contacting the hydrophobic and/or oleophobic coating;
- recovering the optical lens comprising, in direct contact with at least said part of said hydrophobic ic and/or oleophobic ic coating, the temporary adhesive composite film adhering through its pressure.sensitive adhesive layer to the surface of the coated lens;
wherein the modulus of elasticity in tension E' of the pre-formed film is higher than or equal to 4200 MPa and the rupture stress of the assembly composed of said temporary adhesive composite film bonded to a polycarbonate specimen coated with a fluorinated silane layer, measured under tensile stress in accordance with the shear strength evaluation standard NF EN 1465, is higher than or equal to 0.05 MPa.

2. A method according to claim 1, wherein the temporary adhesive composite film is applied onto at least one part of the hydrophobic and/or oleophobic external coating of the optical lens, the pre-formed film of the temporary adhesive composite film being a support film having a main surface that has been coated with said pressure-sensitive adhesive layer prior to applying said temporary adhesive composite film.

3. A method according to claim 1 or 2, wherein the pre-formed film modulus of elasticity in tension E' is higher than or equal to 4450 MPa, more higher than or equal to 4500 MPa.

4. A method according to any preceding claim, wherein the rupture stress of the assembly composed of said adhesive composite film bonded to a polycarbonate specimen coated with a fluorinated silane layer, measured under tensile stress in accordance with the shear strength evaluation standard NF EN 1465 is higher than or equal to 0.0 MPa, preferably higher than or equal to 0.1 MPa.

5. A method according to any preceding claim, wherein the pre-formed film is a polyethylene terephthalate-based film or a cellulose triacetate-based film.

6. A method according to any preceding claim, wherein the adhesive composite film has a thickness ranging from 1 to 250 µm, preferably from 10 to 200 µm.

7. A method according to any preceding claim, wherein the hydrophobic and/or oleophobic coating has a thickness higher than or equal to 2 nm, preferably higher than or equal to 5 nm, more preferably higher than or equal to 10 nm.

8. A method according to any preceding claim, wherein the hydrophobic and/or oleophobic coating is based on fluorosilane and/or fluorosilazane type materials.

9. A method according to any preceding claim, wherein in the temporary adhesive composite film is a coating that can be removed by stripping.

10. A method according to any preceding claim, which furth comprises the steps of:
- Placing the optical lens in an edging device comprising a holding system comprising a holding means so that the holding means adheres to the external surface of the temporary adhesive composite film;
- Edging said lens;
- Removing the lens from of the edging device; and
- Removing the adhesive composite film so as to recover an edged final optical lens.

11. An optical lens capable of in successfully edged, obtainable by the method according to any one of claims 1 to 9.
